# EUROPEAN PATENT APPLICATION

(11) **EP 3 432 192 A1**
(43) Date of publication of application: **23.01.2019**
(21) Application number: 18183376.5
(22) Date of filing: 13.07.2018
(51) Int. Cl.: G06K 7/10

(54) **WIRELESS TAG READING APPARATUS**

(30) Priority: 18.07.2017 JP 2017139370
(71) Applicant: Toshiba Tec Kabushiki Kaisha, Shinagawa-ku Tokyo 141-0032 (JP)
(72) Inventor: Sakurai, Wataru, Tokyo, 141-8562 (JP)
(74) Representative: Hoffmann Eitle

(57) **Abstract**

A wireless tag reading apparatus includes a tunnel, an antenna, and a protrusion. The tunnel section is arranged to surround an upper portion of the lane of a part of a conveyance section for conveying an object to which a wireless tag is attached. The antenna is provided on an inner surface of the tunnel section, and is configured to radiate radio waves to read information stored in the wireless tag attached to the object that is being conveyed. The protrusion is provided at a part of a region on the inner surface of the tunnel section facing the antenna and projects from the region. The protrusion has a step portion facing a center of a surface of the antenna from which radio waves are radiated.

## Description

### CROSS-REFERENCE TO RELATED APPLICATION

This application is based upon and claims the benefit of priority from Japanese Patent Application No. 2017-139370, filed in July 18, 2017, the entire contents of which are incorporated herein by reference.

### FIELD

Embodiments described herein relate generally to a wireless tag reading apparatus.

### BACKGROUND

In a wireless communication such as an RFID (Radio Frequency IDentifier), a technology is known for controlling a reading range of information by surrounding an antenna for radiating radio waves with a radio wave reflective material.

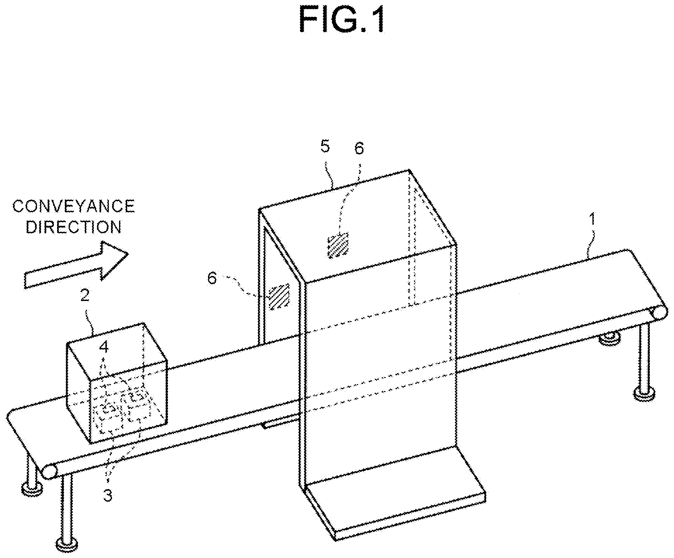

For example, as shown in Fig. 1, an antenna (reader/writer antenna for RFID) 6 is provided on an inner surface of a tunnel-gate 5a which surrounds a middle portion of the lane of a conveyance module 1 such as a conveyor and reads information stored in a wireless tag 4 attached to a product 3 loaded in a package 2 that is being conveyed by the conveyance module 1.

### SUMMARY

One of the objects of the present invention is to improve prior art techniques and overcome at least some of the prior art problems as for instance above illustrated.

According to a first aspect of the present invention, it is provided a wireless tag reading apparatus, comprising:
a tunnel section arranged to surround an upper portion of a part of a lane of a conveyance section for conveying an object to which a wireless tag is attached;
an antenna, provided on an inner surface of the tunnel section, configured to radiate radio waves to read information stored in the wireless tag attached to the object that is being conveyed; and
a protrusion, provided to a part of a region on the inner surface of the tunnel section facing the antenna, which projects from the region, wherein
the protrusion has a step portion facing a center of a surface of the antenna from which radio waves are radiated.

Optionally, in the wireless tag reading apparatus according to the first aspect of the invention, the antenna and the protrusion are provided on an inner side surfaces of the tunnel section.

Optionally, in the wireless tag reading apparatus according to the first aspect of the invention, the protrusion is provided on an inner top surface of the tunnel section.

Optionally, in the wireless tag reading apparatus according to the first aspect of the invention, the antenna is provided on inner bottom surface of the tunnel section.

Optionally, in the wireless tag reading apparatus according to the first aspect of the invention, the conveyance section is provided between the antenna and the protrusion.

Optionally, in the wireless tag reading apparatus according to the first aspect of the invention, the inner surface of the tunnel section is made of a radio wave reflective material.

Optionally, in the wireless tag reading apparatus according to the first aspect of the invention, the protrusion is made of a radio wave reflective material.

Optionally, in the wireless tag reading apparatus according to the first aspect of the invention, the step portion has a height enabling an area in which an electric field intensity is weakened by interference between radio waves radiated from the antenna and radio waves reflected by the inner surface of the tunnel section to be shifted.

Optionally, in the wireless tag reading apparatus according to the first aspect of the invention, the step portion has a height corresponding to a quarter wavelength of radio waves radiated from the antenna.

Optionally, in the wireless tag reading apparatus according to the first aspect of the invention, the step portion projects from the region on the inner surface of the tunnel section in a normal direction of the region.

Optionally, in the wireless tag reading apparatus according to the first aspect of the invention, the step portion obliquely projects from the region on the inner surface of the tunnel section.

Optionally, in the wireless tag reading apparatus according to the first aspect of the invention, the step portion obliquely projects in a straight form from the region on the inner surface of the tunnel section.

Optionally, in the wireless tag reading apparatus according to the first aspect of the invention, the step portion obliquely projects in a curved form from the region on the inner surface of the tunnel section.

Optionally, in the wireless tag reading apparatus according to the first aspect of the invention, the tunnel section includes an entrance door at an entrance of the tunnel section and an exit door at an exit of the tunnel section, the entrance and exit doors arranged to close when a wireless tag is within the tunnel section.

Optionally, in the wireless tag reading apparatus according to the first aspect of the invention, the entrance and exit doors are one of double-doors or single shutter doors.

### DESCRIPTION OF THE DRAWINGS

Fig. 1 is a diagram illustrating an arrangement of a conventional wireless tag reading apparatus;
Fig. 2 is a diagram illustrating an arrangement of a wireless tag reading apparatus according to at least one embodiment;
Fig. 3 is a schematic top view of a tunnel section according to at least one embodiment;
Fig. 4 is a diagram illustrating a state of interference of a radio wave according to a comparative example;
Fig. 5 is a diagram illustrating a state of interference of radio wave according to at least one embodiment;
Fig. 6 is a diagram illustrating an effect according to at least one embodiment;
Fig. 7 is a front view illustrating a tunnel section in a first modification of at least one embodiment;
Fig. 8 is a diagram illustrating a protrusion in a second modification of at least one embodiment;
Fig. 9 is a diagram illustrating a protrusion in the second modification of at least one embodiment;
Fig. 10 is a diagram illustrating a protrusion in the second modification; and
Fig. 11 is a diagram illustrating an arrangement of a wireless tag reading apparatus in a third modification of at least one embodiment.

### DETAILED DESCRIPTION

In accordance with at least one embodiment, a wireless tag reading apparatus comprises a tunnel section arranged to surround an upper portion of a lane of a part of a conveyance section for conveying an object to which a wireless tag is attached; an antenna section, provided on an inner surface of the tunnel section, configured to radiate radio waves to read information stored in the wireless tag attached to the object that is being conveyed; and a protrusion, provided at a part of a region on the inner surface of the tunnel section facing the antenna section, which projects from the region, wherein the protrusion has a step portion facing a center of a surface of the antenna section from which radio waves are radiated.

Embodiments of a wireless tag reading apparatus are described in detail with reference to the accompanying drawings.

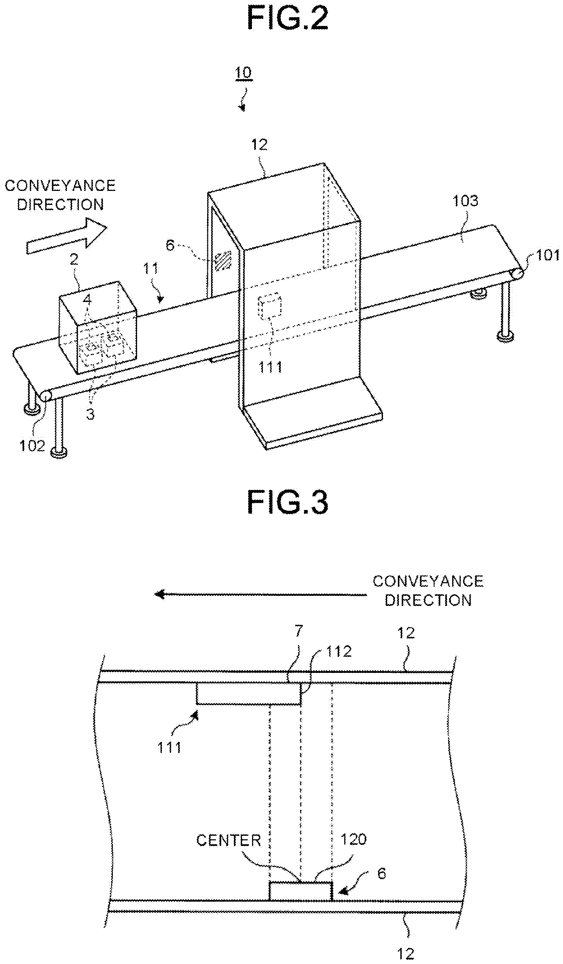

Fig. 2 is a diagram illustrating an arrangement of a wireless tag reading apparatus 10 according to at least one embodiment. As shown in Fig. 2, the wireless tag reading apparatus 10 includes a conveyor 11 and a tunnel section 12.

The conveyor 11 is an example of a "conveyance section" for conveying an object with a wireless tag 4 placed thereon. The "object with the wireless tag 4 (object to be conveyed)" may be a product 3 to which the wireless tag 4 is attached, or a package 2 (e.g., a cardboard) in which the product 3 having the wireless tag 4 is housed.

The conveyor 11 is made up of a driving roller 101, a driven roller 102, and a belt 103 wound between the driving roller 101 and the driven roller 102. For example, a control device (not shown) performs control to drive a motor to rotate the driving roller 101, and in this way, an object (package 2) on the belt 103 can be conveyed in a direction shown by an arrow in Fig. 2.

The tunnel section 12 is installed such that it surrounds an upper portion of a part of the conveyance section for conveying the object with the wireless tag 4 placed thereon. The tunnel section 12 is a member through which the conveyance section penetrates (in the same direction as a conveying direction). In this example, the tunnel section 12 surrounds the middle portion of the lane of the conveyance section. The inner surface of the tunnel section 12 (inner surface of a hole through which the conveyor 11 penetrates) is made of a radio wave reflective material which reflects radio waves. As the radio wave reflective material, for example, a metal (aluminum or the like) is included.

As shown in Fig. 2, on the inner surface of the tunnel section 12, a reader/writer antenna 6, an example of an "antenna section", that reads information stored in the wireless tag 4 by radiating radio waves is provided. For convenience of explanation, only one reader/writer antenna 6 is provided in Fig. 2, but embodiments are not limited to this, and the number of reader/writer antennas 6 can be arbitrarily changed. For example, two or more reader/writer antennas 6 may be provided on the inner surface of the tunnel section 12. In this embodiment, the reader/writer antenna 6 is provided on the inner surface of one of the side walls of the tunnel section 12, but embodiments are not limited to this, and the location of the reader/writer antenna 6 can be arbitrarily changed.

The reader/writer antenna 6 periodically radiates radio waves, and the wireless tag 4 receiving the radio waves performs a response including information stored (recorded) in the wireless tag 4. As the information stored in the wireless tag 4, for example, information for identifying the wireless tag 4 and information (product information) relating to the product 3 to which the wireless tag 4 is attached are included. The reader/writer antenna 6 receives the response from the wireless tag 4, and reads the information contained in the received response. For example, the reader/writer antenna 6 may include an antenna and a driving section that drives the antenna to read/write information from or to the wireless tag 4. If a plurality of reader/writer antennas 6 is provided, each reader/writer antenna 6 is driven in time division manner to transmit radio waves.

In at least one embodiment, a protrusion 111 is provided on the inner surface of the tunnel section 12 such that it projects from at least a part of a region (hereinafter, referred to as an "opposite region") of the inner surface of the tunnel section 12 that faces the reader/writer antenna 6. The protrusion 111 is made of a radio wave reflective material reflecting radio waves. For example, a metal such as an aluminum is included as a radio wave reflective material. A detail of the protrusion 111 is described below.

Fig. 3 is a schematic diagram illustrating a part of the tunnel section 12 viewed from the above, and indicating a positional relationship between the reader/writer antenna 6 and the protrusion 111. As shown in Fig. 3, the protrusion 111 overlaps with a part of the opposite region 7. Then, the positional relationship between the protrusion 111 and the reader/writer antenna 6 is set in such a manner that the step portion 112 of the protrusion 111 faces the center of a surface 120 (hereinafter referred to as a "radio wave radiating surface 120") radiating radio waves of the reader/writer antenna 6.

In the example in Fig. 3, the step portion 112 of the protrusion 111 protrudes (vertically projects) in a normal direction of the region 7. Specifically, the top surface and the bottom surface of the protrusion 111 are flat surfaces opposite to each other, and the bottom surface overlaps on a part of the opposite region 7. Side surfaces connecting the peripheral edge of the top surface and the peripheral edge of the bottom surface form the step portion 112 having a height difference. In this example, the shape of the protrusion 111 is a quadrangular prism shape (cube or rectangular parallelepiped), but the present embodiment is not limited thereto, and the shape thereof may be a cylinder or the like.

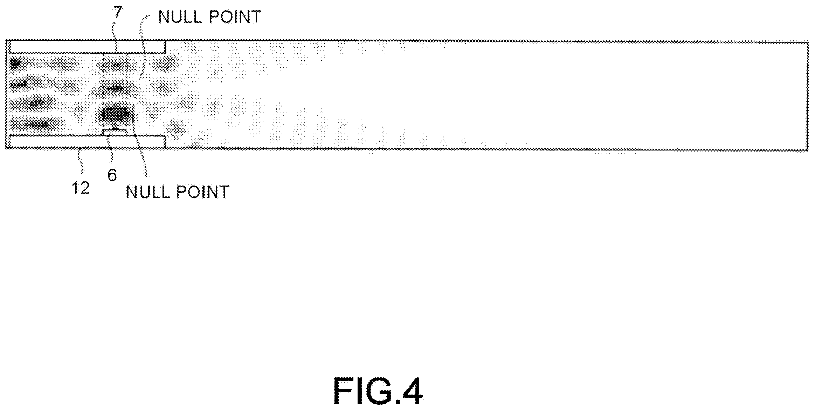

As shown in Fig. 4, in a conventional constitution (comparative example), the protrusion 111 is not arranged in a region (equivalent to the opposite region 7 described above) facing the reader/writer antenna 6 provided on the inner surface of the tunnel section 12. As an example, a size of the width of the reader/writer antenna 6 in the conveyance direction thereof is 20 cm, and the reader/writer antenna 6 radiates radio waves in 920 MHz band (one wavelength is about 32 cm). Fig. 4 is a schematic diagram imagenally illustrating the tunnel section 12 observed from the above, and the distribution of the electric field intensity of radio waves radiated by the reader/writer antenna 6 is shown in black gradation images. In the figure, a nearly black portion represents a portion where the electric field intensity becomes strong, and a nearly white portion shows a portion where the electric field intensity becomes weak.

In the comparative example shown in Fig. 4, in a space between the reader/writer antenna 6 and the region facing the reader/writer antenna 6 of the inner surface of the tunnel section 12, the portion where the electric field intensity is strong and the portion where the electric field intensity is extremely weak alternatively appear per quarter wavelength (about 8 cm) of radio waves radiated from the reader/writer antenna 6. Hereinafter, the portion where the electric field strength is extremely weak, i.e., a place where radio waves radiated from the reader/writer antenna 6 and radio waves reflected by the inner surface of the tunnel section 12 interfere with each other to be weakened is referred to as a "null point".

In the comparative example shown in Fig. 4, since the null points are continuously connected along the conveyance direction, if the wireless tag 4 being conveyed enters the null point, the wireless tag 4 cannot receive radio waves with sufficient strength from the reader/writer antenna 6 and, as a result, the wireless tag 4 cannot perform a response. Therefore, it becomes difficult for the reader/writer antenna 6 to read information stored in the wireless tag 4.

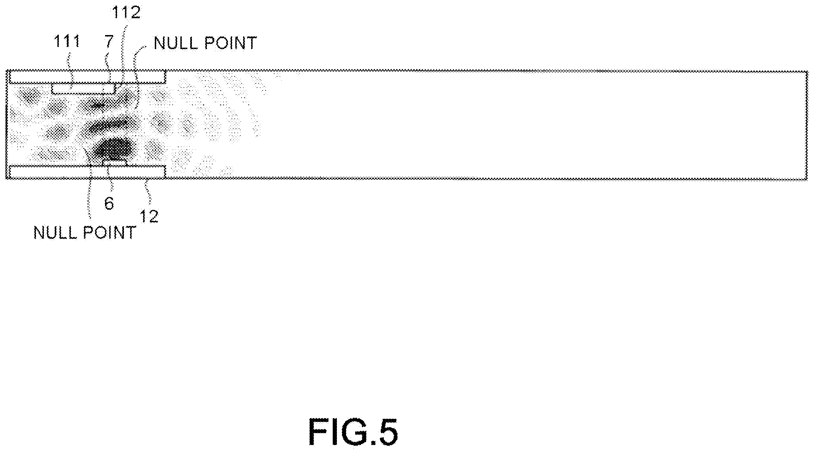

In at least one embodiment, as shown in Fig. 5, the protrusion 111 is provided on a part of the opposite region 7, and the step portion 112 of the protrusion 111 is arranged to face the center of the radio wave radiating surface 120 of the reader/writer antenna 6. In this way, a reflection timing of radio waves at a high part of the step portion 112 (equivalent to the height of the top surface of the protrusion 111) and a reflection timing of radio waves at a low part of the step portion 112 (equivalent to the height of the opposite region 7) can be different from one another. Thus, it is possible to change the states of interference of radio waves in left and right (left and right shown in Fig. 5) regions with respect to the step portion 112 as a boundary, and, as a result, the null points are shifted.

The height of the step portion 112 of the protrusion 111 is set to a height which enables the places (null points) where radio waves radiated from the reader/writer antenna 6 and radio waves reflected by the inner surface of the tunnel section 12 interfere with each other to be weakened to be shifted. The height of the step portion 112 in Fig. 5 is set to a height corresponding to a quarter wavelength of radio waves radiated from the reader/writer antenna 6. In this way, if the reflection timings are shifted at each quarter wavelength serving as the period of interference, the null points are shifted, certainly.

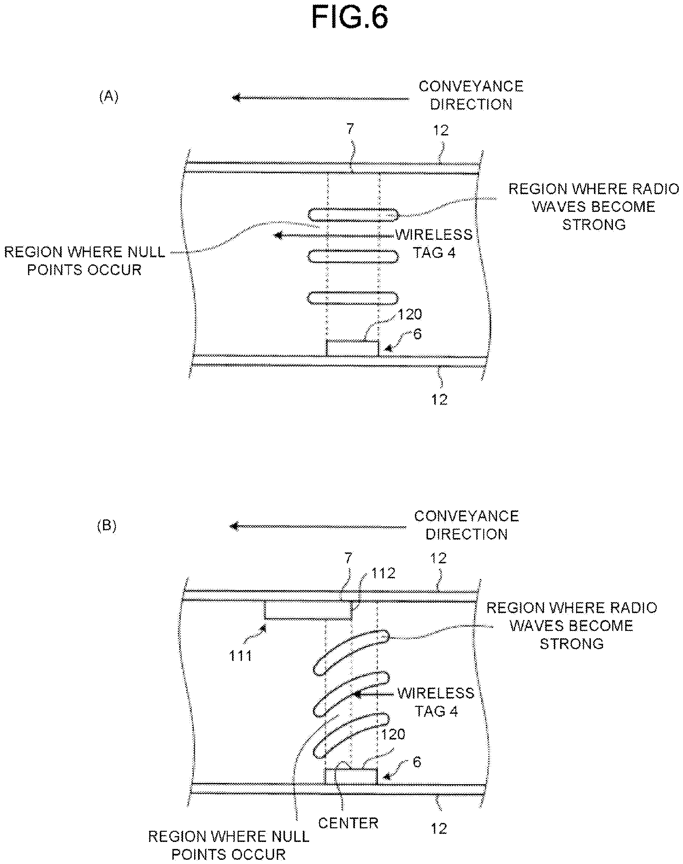

As shown in Fig. 6(A), in the comparative example, the regions where null points occur are continuously connected along the conveyance direction, whereas in at least one embodiment, by shifting the null points as described above, the waveform of the superposed radio waves is distorted, as shown in Fig. 6(B). In this way, in comparison with the comparative example, it is possible to suppress the length of continuous null points along the conveyance direction (suppressing the length of the unreadable area in the conveyance direction), and as a result, reading accuracy of information stored in the wireless tag 4 can be improved.

Modifications of at least one embodiment are described below. The modifications described below can be arbitrarily combined with the above-described embodiments.

### (1) First Modification

In the above embodiment, the reader/writer antenna 6 is provided on the inner surface of one of the side walls of the tunnel section 12, but it is not limited thereto. For example, the reader/writer antenna 6 may be provided on the bottom surface of the tunnel section 12.

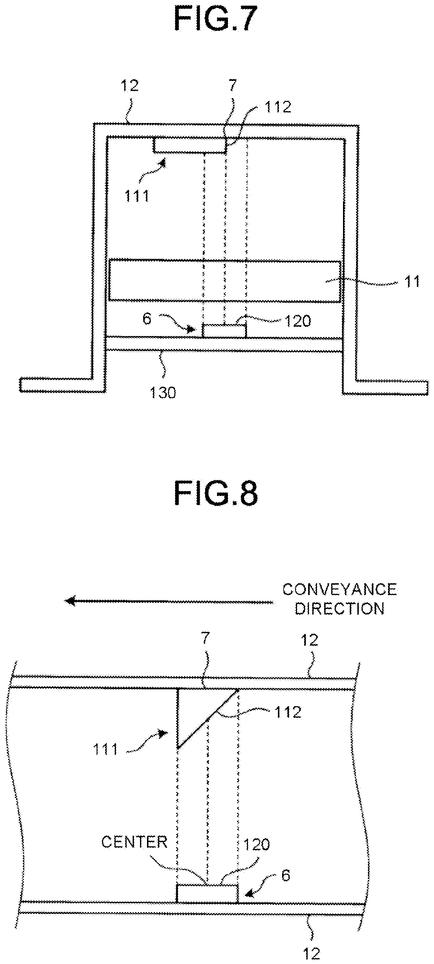

Fig. 7 is a front view of the tunnel section 12, and a bottom plate 130 is provided below the conveyor 11. The upper surface of the bottom plate 130 corresponds to the inner surface of the bottom wall of the tunnel section 12, and the reader/writer antenna 6 is provided on the inner surface of the bottom wall. The protrusion 111 is provided at a part of the opposite region 7 of the inner surface of the top wall of the tunnel section 12 facing the reader/writer antenna 6. The positional relationship between the reader/writer antenna 6 and the protrusion 111 is set similarly to the above-described embodiment.

### (2) Second Modification

For example, the step portion 112 of the protrusion 111 may obliquely protrude. As shown in Fig. 8, the protrusion 111 overlaps with the opposite region 7 (the bottom surface of the protrusion 111 is included in the opposite region 7), and the inclined step portion 112 faces the radio wave radiating surface 120 of the antenna 6. In this arrangement also, since the reflection timings of the radio waves can be different among the plurality of regions having the height difference on the step portion 112, the null points can be shifted similar to that in the above-described embodiment.

The step portion 112 which obliquely protrudes may protrude obliquely in a straight form as shown in Fig. 8, or in a curved form.

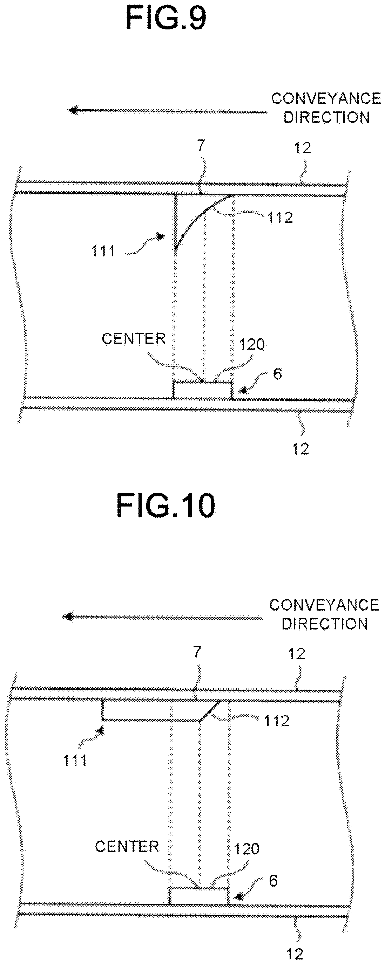

Furthermore, as shown in Fig. 10, the protrusion 111 overlaps with a part of the opposite region 7, and the step portion 112 may obliquely descend from the flat top surface of the protrusion 111 towards the opposite region 7.

Any of the above-described modifications are subject to the concept "the step portion 112 of the protrusion 111 faces the center of the surface 120 radiating radio waves of the reader/writer antenna 6".

### (3) Third Modification

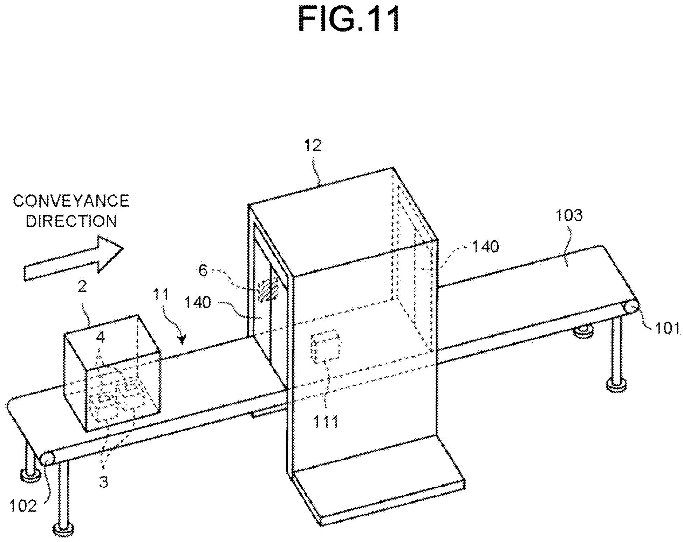

For example, as shown in Fig. 11, doors 140 may be provided at an entrance and an exit of the tunnel section 12 to open and close in response to a conveyance position of the object to be conveyed. According to this modification, it is possible to restrain the radio waves radiated from the reader/writer antenna 6 from leaking out of the tunnel section 12, and reading of the wireless tag 4 beyond the reading range (tunnel section 12) can be prevented. As a result, reading accuracy of the wireless tag 4 within the reading range can be improved.

The type of the door 140 is arbitrary selected. For example, it may be a double-door. As the double-door, a double-swing-door may be selected. The double-swing-door is constituted in such a form that each of left and right doors is rotatable about a hinge. With respect to the hinge, an urging force which maintains the left and right doors in a closed state is always applied by an elastic member such as a spring. If a moving load of the object to be conveyed exceeds the urging force, the left and right doors are respectively rotated in opening directions (clockwise and un-clockwise) thereof.

For example, the door 140 may be a double-slide-door or a single shutter type door. In these forms, it is applicable that the position of the object to be conveyed is sensed and the opening and closing of the door is automatically controlled according to the sensed position. The door 140 may be opened and closed according to the conveyance position of the object.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the spirit of the invention. The accompanying claims and their equivalents are intended to cover such forms or modifications as would fall within the scope and spirit of the invention.

## Claims

1. A wireless tag reading apparatus, comprising:
a tunnel section arranged to surround an upper portion of a part of a lane of a conveyance section for conveying an object to which a wireless tag is attached;
an antenna, provided on an inner surface of the tunnel section, configured to radiate radio waves to read information stored in the wireless tag attached to the object that is being conveyed; and
a protrusion, provided to a part of a region on the inner surface of the tunnel section facing the antenna, which projects from the region, wherein
the protrusion has a step portion facing a center of a surface of the antenna from which radio waves are radiated.

2. The wireless tag reading apparatus according to claim 1, wherein the antenna and the protrusion are provided on an inner side surfaces of the tunnel section.

3. The wireless tag reading apparatus according to claim 1 or 2, wherein the protrusion is provided on an inner top surface of the tunnel section.

4. The wireless tag reading apparatus according to claim 3, wherein the antenna is provided on an inner bottom surface of the tunnel section.

5. The wireless tag reading apparatus according to any of claims 1 to 4, wherein the conveyance section is provided between the antenna and the protrusion.

6. The wireless tag reading apparatus according to any of claims 1 to 5, wherein the inner surface of the tunnel section is made of a radio wave reflective material.

7. The wireless tag reading apparatus according to any of claims 1 to 6, wherein the protrusion is made of a radio wave reflective material.

8. The wireless tag reading apparatus according to any of claims 1 to 7, wherein
the step portion has a height enabling an area in which an electric field intensity is weakened by interference between radio waves radiated from the antenna and radio waves reflected by the inner surface of the tunnel section to be shifted.

9. The wireless tag reading apparatus according to any of claims 1 to 8, wherein
the step portion has a height corresponding to a quarter wavelength of radio waves radiated from the antenna.

10. The wireless tag reading apparatus according to any of claims 1 to 9, wherein
the step portion projects from the region on the inner surface of the tunnel section in a normal direction of the region.

11. The wireless tag reading apparatus according to any of claims 1 to 10, wherein
the step portion obliquely projects from the region on the inner surface of the tunnel section.

12. The wireless tag reading apparatus according to any of claims 1 to 11, wherein
the step portion obliquely projects in a straight form from the region on the inner surface of the tunnel section.

13. The wireless tag reading apparatus according to any of claims 1 to 11, wherein
the step portion obliquely projects in a curved form from the region on the inner surface of the tunnel section.

14. The wireless tag reading apparatus according to any of claims 1 to 13, wherein the tunnel section includes an entrance door at an entrance of the tunnel section and an exit door at an exit of the tunnel section, the entrance and exit doors arranged to close when a wireless tag is within the tunnel section.

15. The wireless tag reading apparatus according to claim 14, wherein the entrance and exit doors are one of double-doors or single shutter doors.
